# EUROPEAN PATENT SPECIFICATION

(11) **EP 0 447 441 B1**
(45) Date of publication and mention of the grant of the patent: **28.07.1993**
(21) Application number: 90900373.3
(22) Date of filing: 07.12.1989
(51) Int. Cl.: B29C 43/22, B29C 39/16, B29K 91/00

(54) **DEVICE AND PROCESS FOR THE PRODUCTION OF SLABS OF THERMOPLASTIC MATERIAL**
VORRICHTUNG UND VERFAHREN ZUR HERSTELLUNG VON GIESSSTÜCKEN AUS THERMOPLASTISCHEM MATERIAL
DISPOSITIF ET PROCEDE DE PRODUCTION DE TRANCHES DE MATERIAU THERMOPLASTIQUE

(30) Priority: 09.12.1988 NL 8803036
(43) Date of publication of application: 25.09.1991
(73) Proprietor: PARAMELT SYNTAC B.V., NL-1704 RJ Heerhugowaard (NL)
(72) Inventor: DE FOUW, Adriaan, Leendert, NL-1931 XJ Egmond aan Zee (NL); SIJPESTEIN, Pieter, NL-1722 WJ Zuid-Scharwoude (NL)
(74) Representative: de Bruijn, Leendert C.
(86) International application number: NL8900093
(87) International publication number: WO9006219

(56) References cited:
- FR-A- 2 027 385
- FR-A- 2 394 384
- GB-A- 1 116 870
- US-A- 2 509 354

## Description

The invention relates to a process for the production of slabs of wax, in which wax is fed between two endless conveyor belts of a conveyor device placed opposite each other and one above the other, and is cooled while passing through this conveyor device and discharged in slab form from said device.

Such a process is known from an advertisement of the Sandvik company in "Chemical Engineering", 18 December 1978, p. 46. Cooling takes place through spraying the top conveyor belt on the top side and the bottom conveyor belt on the bottom side with water. The pressure of the two conveyor belts on the material fed through ensures that good contact between the product and the two cooling belts is ensured. It is stated that various waxes are placed on the belt from an apparatus for forming strips (a "strip former"). In this case a strip former is understood to be an apparatus which makes molten strips approximately 20 mm wide flow out at approximately equal distances from each other in the lengthwise direction of the cooling belt. At the end of the belt these strips are cooled and fed into a granulator which makes toffee-like shapes of them. Hot- melt adhesives are often put in this form. The strip former as such comprises a pipe with holes, from which the viscous, molten mass flows onto the cooling belt. This method cannot be used for plastic wax types, which are the subject of the process according to the invention, because it is impossible with a low-viscosity material to obtain an adequate thickness on the belt without the strips running together, and because the strips cannot be granulated should they be produced in a reasonable form. The granulator connected downstream of the conveyor/cooling device instantaneously becomes clogged. Applicants carried out production experiments with the device used in this process, and this problem was found, and material in slab form with the desired dimensions was not obtained.

Dutch Patent Application 79.06467 discloses a process and device for the production of slabs of thermoplastic material, such as wax or a thermoplastic plastic, in which the starting material is fed unsolidified into the space between two parallel, spaced apart vertical parts of two endless conveyor belts, the material being placed on the returning parts. A major disadvantage of this known process is that, in order to obtain a reasonable production output, the device has to be of a height which is very considerable and is virtually impossible in practice. Besides, with the known device there is a great risk of soiling of the outflow aperture and of other elements which are essential for the device, such as the guide wheels for the conveyor belts. No seal is used along the edges, so that thermoplastic material will come out at the sides. The use of a solvent is not mentioned anywhere, so that it is likely that the method described is not suitable for material which has a tendency to stick to the conveyor belts.

In general, waxes are refined and mixed with other waxes or with plastics, synthetic resins, pigments and the like, by melting them together at a temperature between approximately 80 and 150°C. If the mixture is mixed homogeneously, it must be put in a form in which the wax can be transported and stored.

According to a usual process, the wax or wax compound is placed in liquid form in a mould and subsequently solidified, cooled, removed from the mould, and packed. In the most suitable process of the state of the art, so-called slabbers or cooling presses are used. The cooling is carried out by means of cooling water. The slabbers can in general be filled and emptied approximately five times per normal working day. This method has, however, major disadvantages. For example, it has been found that the solidified slabs often have sizeable shrinkage cavities. With this method most waxes have a shrinkage of 10 - 15% between 100°C and 20°C. An additional problem is shrinking away of the wall. For, the heat transfer is not ideal because the filled chamber is at rest and a solidified layer of wax arises from the cooled side. In the case of sticky products it is difficult to unload the slabbers. The removal of the slabs often involves the use of some force, which leads to damage of the slab surface. In a subsequent operation the adhesion to the slab is then even stronger. This is a cumulative process which in the long run necessitates a complete overhaul of the cooling plate. Other disadvantages of slabbers are also the frequent occurrence of blockages of the cooling plates, water leaks and, in particular, the hard work involved.

According to another known method, a large number of wax moulds are suspended between two endless chains. The wax moulds are filled automatically and conveyed by the slow-moving chain into a cooled room. This room is cooled with highly cooled air to a low temperature at which the wax solidifies. On its emergence from the cooled room, the wax is unmoulded by means of a removal mechanism, or through the container being inverted. The wax can now be packed further, and the empty mould is automatically refilled. The advantage of this method is that it involves a minimum of work; the disadvantage is that a very large amount of energy is required to achieve a reasonable output. Besides, in the case of more plastic waxes the capacity is very soon reduced by half, and this method is not suitable for sticky types of wax.

In the production of wax compounds a distinction must be made between two groups of products, viz:
A) the harder, non-sticky products, and
B) the more plastic to soft products which are more or less sticky.

The processing of the types specified in A) can take place very well without the use of slabbers, by means of prilling or pelleting. Pelleting, for example, is carried out by applying liquid wax drop by drop to a cooling belt. Both prilling and pelleting can be used for sticky waxes, but the problems arise thereafter.

Due to the sticky nature of the products, the prills or pellets stick to each other again after packaging, thereby forming large conglomerates which are difficult to handle and contain large quanties of trapped air. The limit at which a wax can still be pelleted or prilled lies approximately at 25°C at a penetration of 22-30, measured by the ASTM T 1321-86 method. Moreover, this limit depends on the composition of the wax compound.

The object of the present invention is to eliminate the disadvantages which the wax production methods described above have (with the exception of the pelleting or prilling of the harder wax types), and which are increasingly unpleasant as the wax (compound) becomes more plastic/stickier.

This object is achieved according to the invention by a process of the type mentioned in the preamble of claim 1, which is characterized in that the wax serving as the starting material is first heated to a pouring temperature in the range of 10°C above to 10°C below the solidification point, and is then poured onto the bottom conveyor belt over the full width or a considerable part thereof, lateral leakage of the wax is prevented and the slab discharged from the conveyor device is cut into pieces of the desired dimensions.

In the context of the present invention, wax also includes wax compounds and wax-type materials. For a definition of wax, reference is made to "Wax, an introduction" by R. Sayers, written on behalf of the European Wax Federation (1983). A definition of wax is given on p. 16. Although the present invention is particularly concerned with waxes from petroleum, mixtures thereof, and mixtures thereof with synthetic resins and/or plastics, the invention can in principle be used for the whole range of waxes, wax compounds and thermoplastic materials, i.e., for example, also materials such as hot -melt adhesives and materials with similar melting properties. The term "wax" used in this description and the accompanying claims covers all such materials.

The process according to the invention is preferably carried out continuously through depositing the wax without interruption onto the bottom conveyor belt. In this respect, the wax may flow like a viscous fluid, or be laid down as a paste-like mass.

Depending on the composition, the wax used as the starting material has a value which lies in the region of the solidification point of the wax. In general, a temperature range of 60-140°C can be specified. It is, however, preferable here for the temperature to lie in a range ⁵°C above to 5°C below, the solidification point of the wax.

In practice, the wax to be produced is heated in mixing pans. In the process, the starting material is brought to a temperature which may be more than 10°C above the solidification point. It is preferable to discharge the solidification heat of the pourable wax into a separate device as far as possible until the "ideal" pouring temperature has been achieved. As stated above, this temperature lies around the solidification point of the wax, for example in a range of 5°C above to 5°C below the solidification point of the wax. For cooling to the ideal pouring temperature, it is preferable to use a scraped or scraper cooler. The wax is conveyed from the scraper cooler via a filling station to the conveyor device, for example a double steel belt cooler. The filling station must be made such that the conveyor device is filled in the optimum manner.

In the process according to the invention use is made of conveyor belts with adjustable spacing between them. It is essential in the process according to the invention for the wax applied to the bottom conveyor belt to be also in contact with the top conveyor belt.

In order to prevent sticking of the wax to cooling belts and side guide belt, it is possible to moisten belts and guide with a solvent: In general, an aqueous solution of a surfactant or a mineral oil is used for this, although solvents of other types, which are known per se, can also be used.

Since the wax leaves the filling station at as low a temperature as possible, solidification will occur fairly quickly. It must in any case take place in the part of the conveyor device which is provided with the sealing side guide system. After leaving this part of the conveyor device, no leakage can occur any more at the sides. The belt contact with the top and bottom cooling belt can be retained by the top belt resting on the solidified wax.

At the end of the conveyor device an endless wax slab emerges and is cut into manageable formats. The use of professional cutting equipment such as knives (stationary, rotary or acting as a guillotine) and wires, which may or may not be heated, is possible in principle, although heavy soiling of equipment and product occurs, and the risk of breakdowns increases.

In the process according to the invention the endless wax slab is preferably cut with a liquid jet. The advantage of this is that no soiling of wax slabs and cutting mechanism occurs, no heat need be fed in, and the spray nozzles of the liquid jet are easy to change. It is also preferable to cut the wax slabs by means of a laser beam, in particular if one wishes the process to be liquid-free . Water or oil, for example, can be used as the liquid. It is also possible to cut by means of compressed air.

The cutting device cuts the wax slab in the lengthwise and crosswise directions into slabs of manageable dimensions.

After this operation, the slabs are conveyed further to a packing line, which stacks and packs them, either with or without dividing sheets (for example, siliconized paper or film).

The invention also relates to a device suitable for carrying out the process according to one of the preceding claims, provided with two endless conveyor belts placed opposite each other between which the wax is fed, with side guide belts facing along with and between the parts of the conveyor belts facing each other, and having two flat, parallel surfaces facing away form each other, each of which can mate in sealing fashion with the opposite surface of the corresponding conveyor belt part, which side guide belts are guided around over two pulleys whose centre line is at right angles to the surfaces of the conveyor belt parts facing each other, and with means for cooling the wax.

Such a device is known from FR-A-2394384. This known device comprises vertical conveyor belts, defined by slats which are supported, by,rollers at the side facing away from the moulding space. Thus, the vertical conveyor belts delimit a moulding space with a constant thickness, into which a thermoplastic material is introduced. Under the influence of gravity, this material fills the moulding space, and thereafter solidifies.

For the following reasons, this known device is not suitable for the production of slabs of wax. First of all, it is not possible to obtain a homogeneous wax filling without voids in the vertically situated moulding space. Due to the fact that the wax is poured at a temperature close to its solidification point, it is rather viscous. Therefore, it takes some time before the wax is spread out evenly. An envenly spreaded wax layer is important for eliminating voids.

However, when poured into a vertically situated moulding space, the viscous wax irregularly falls downward under the influence of gravity. Such a mode of filling for a viscous material is hardly controllable and inevitably leads to the formation of voids.

A further problem associated with the production of slabs of wax is the high shrinkage of the wax upon solidification and colling down. Due to this shrinkage, the contact between the wax-surfaces and one or both walls of the moulding space will be lost. Such a loss of contact is very disadvantageous, as it delays the cooling and solidification of the wax considerably. This would limit the speed of production to an unacceptable degree.

The aim of the invention is to provide a device lacking these disadvantages, and which is therefore well suited for the production of slabs of wax. This aim is achieved in that the conveyor belts are positioned one above the other, and that the upper conveyor belt is at least partly freely displaceable perpendicular to its plane in such way that he is resting on the solidified, shrunk wax for further cooling thereof.

The still flowable wax is now able to spread out evenly over the lower conveyor belt. As soon as it contacts the upper conveyor belt, its upper surface is levelled regularly. Also, the cooling of the wax is now accelerated.

As the wax shrinks on further cooling, the upper belt adapts to any shrink differences as he is free to follow the wax surface. Thereby, an excellent and rapid cooling of the wax is maintained, as is the regular, plane character of its surface.

In this way, a high production speed can be maintained together with a perfectly plane surface of the slabs of wax thus produced.

According to a practical embodiment, provision can be made in this case for the pulleys to be located outside the conveyor belt parts facing each other, in such a way that only the side guide belts are situated between the conveyor belt parts facing each other.

Provision is preferably made for the side guide belts to have a solid rectangular cross-section.In this embodiment a relatively large contact surface is obtained between each side guide belt and the conveyor belts, which benefits the seal. According to the invention, provision can also be made at the guided part of the side guide belts outside the conveyor belts for stabilization means above and below the side guide belts for holding the guided part flat. In particular, if the dimensions of the side guide belts are considerably greater in the plane of the pulleys than at right angles thereto, there is in fact a risk of the side guide belts "flipping over" in said guided parts. This flipping over can be reliably avoided by means of the above-mentioned stabilization means, which can be, for example, rollers whose centre line runs along the radius of the pulleys.

The side guide belts can be designed in various ways. Provision may be made for each of them to comprise a V-belt which on the largest trapezium side is provided with a rectangular strip of bendable material. This rectangular strip of bendable material forms the part of the side guide belt which can be inserted between the facing parts of the conveyor belts.

The V-belt and the strip may be made of polyurethane and are attached to each other by means of adhesive.

In order to increase the seal between the side guide belts and the conveyor belts, provision can be made for the conveyor belts to be supported and/or held by pressure at the level of the region over which the side guide belts can extend.

Preferably, the side guide belts extend only at the first part of the conveyor belts, where the wax or other thermoplastic material is still flowable, such that the second part of the conveyor belt is freely displaceable perpendicular to its plane. This arrangement provides an excellent contact between the belts and the wax for further cooling of the solidified wax.

In order to obtain a flat, regular layer of still flowable wax transverse with respect to the belts, in the direction of movement of the conveyor belt parts facing each other the rearmost end of the lowest conveyor belt is situated behind the rearmost end of the upper conveyor belt. Preferably, in the direction of movement of the conveyor belt parts facing each other means for feeding the wax are situated such that the upper conveyor belt part does not extend up to and above the feeding means. In this embodiment, the wax can spread out very evenly before it contacts the upper conveyor belt.

The invention will be explained in greater detail below with reference to an example of an embodiment shown in the figures.

Fig. 1 shows a side view of the device according to the invention.

Fig. 2 shows a top view of a part of the device of Fig. 1.

Fig. 3 shows cross-section III-III of Fig. 2, on a larger scale.

Fig. 4 shows cross-section V-V of Fig. 2 on a larger scale.

Fig. 5 shows a partial view of the device in perspective.

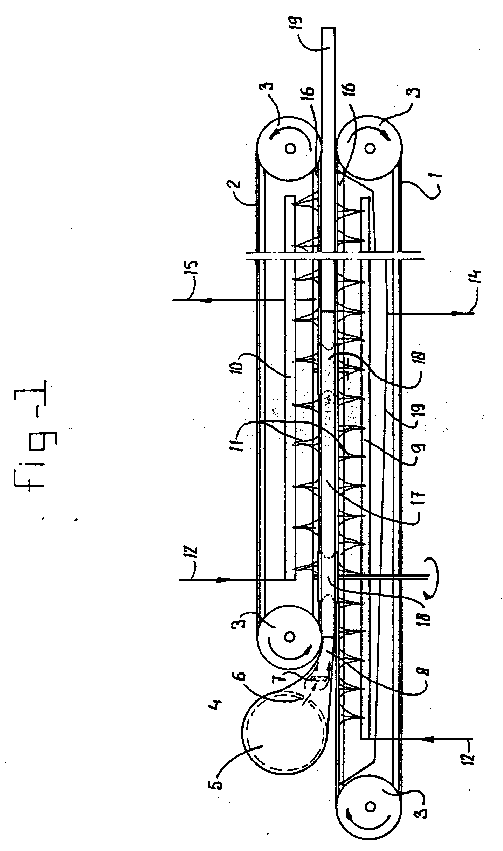

The device shown in Fig. 1 comprises an endless bottom belt 1 and an endless top belt 2, which are guided around over rollers 3. A feed element 4 for molten wax is provided at the rear end of the conveyor belt 1, 2, viewed in the direction of rotation of the parts facing each other. The molten wax is taken from the container 5 via holes 6 and baffle 7 through the nozzle 8 and deposited between the conveyor belts 1,2. The wax is then carried along between the moving conveyor belts 1, 2 and solidifies in the process. The conveyor belts are cooled with a suitable liquid 11 by means of the spray elements 9, 10. The cooling liquid is fed in through the pipes 12. The liquid sprayed on the bottom conveyor belt 1 is collected in tank 13 and discharged through pipe 14. The liquid sprayed onto the top conveyor belt 1 cannot flow away, due to raised longitudinal edges 16 in the form of V-belts on the conveyor belt, and is extracted through pipe 15. The device is also provided on either side of the conveyor belts 1, 2 with side guide belts, one 17 of which can be seen in Fig. 1. The side guide belts are guided around over pulleys 18 and move at the same speed as the conveyor belts 1, 2. A solidified wax slab 19, which is subsequently further processed in the known manner, is discharged from the device.

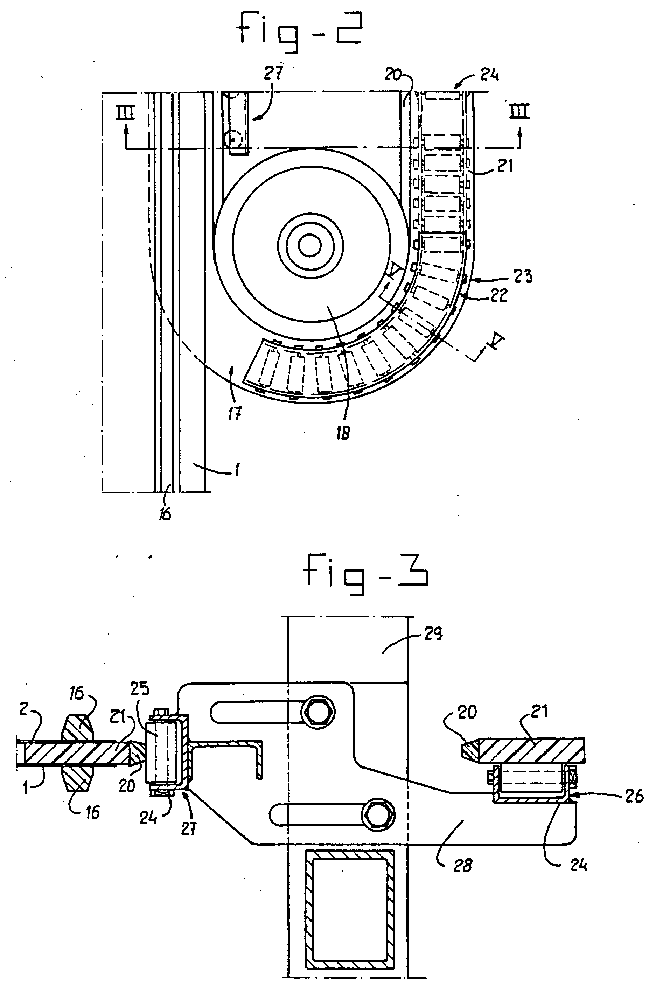

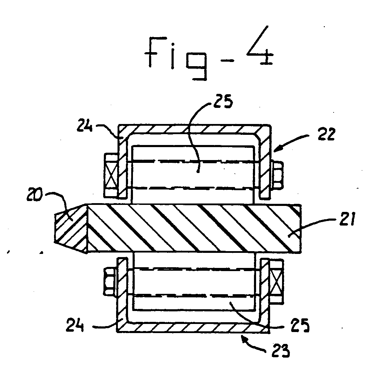

In the top view shown in Fig. 2 the manner in which the side guide belt 17 is guided round can be seen. The side guide belt comprises a part 20 which is designed as a V-belt, and a part 21 which is a strip of flexible material such as polyurethane attached thereto. The V-belt part 20 is accommodated in the peripheral groove of pulley 18, and the belt part 21 projects relative to said pulley 18. As can also be seen in Fig. 4, the belt part 21 located near the pulley 18, which is curved, is supported at its top and bottom side by correspondingly curved roller guides 22, 23. These roller guides 22, 23 each comprise a U-shaped section 24 containing rotary rollers 25. As can be seen in Fig. 2, the roller guides 22, 23 run through almost to the conveyor belts 1, 2. In this way, the side guide belt 17 can be well secured against flipping over from its plane.

As shown in Fig. 3, the side guide belt is also supported between its guided parts. At the part facing away from the conveyor belts 1, 2 it rests on guides 26, also comprising U-shaped sections 24 and rollers 25. The part facing the conveyor belts 1, 2 is pressed, against the pressure of the liquid wax, between said conveyor belts 1, 2 by guides 27. The latter also comprise a U-shaped section 24 and rollers 25, but are turned through 90° relative to the preceding guides 26. These guides 22, 23, 26 and 27 are supported on frame leg 29 of the device by means of adjustable supports 28.

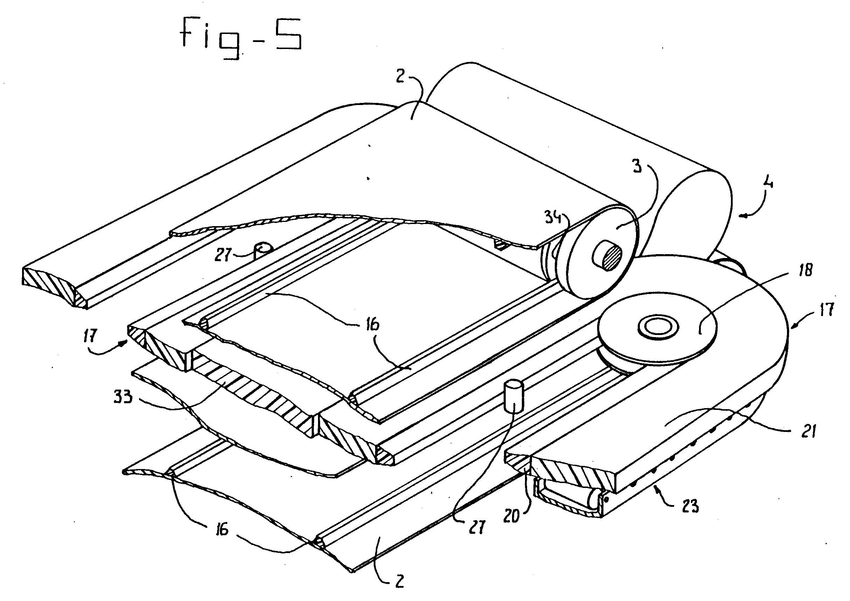

The illustration in perspective in Fig. 5 shows that the solidifying wax is confined between bottom and top conveyor belts 1, 2, and the left and right side guide belts 17. For the sake of clarity, a number of elements such as roller guide 22 and the U-shaped channel 24 of the roller guide 27 have been omitted from this figure. It can also be seen that the rollers 3 are provided with suitable V-shaped grooves 34 for the V-belts 16 on the conveyor belts 1, 2. If this is necessary for obtaining a good seal between conveyor belts 1, 2 and side guide belts 17, provision can be made for pressure rollers (not shown) acting on the V-belts 16 and pressing the conveyor belts 1, 2 against the part 21 of the side guide belts 17.

## Claims

1. Process for confectioning of wax or wax-like material, in which wax is fed between two in general horizontal endless conveyor belts (1,2) of a conveyor device placed opposite each other and one above the other, and is cooled while passing through this conveyor device and discharged from said device, characterized in that the wax serving as the starting material is first heated to a temperature lying more than 10°C above the solidification point, is cooled to the pouring temperature, and is then poured onto the bottom conveyor belt (1) over the full width or a considerable part thereof, so as to form a slab (19) of wax which is continuous in the transverse direction of said belt, lateral leakage of the wax is prevented, and the slab (19) discharged from the conveyor device is cut into pieces of the desired dimensions.

2. Process according to claim 1, characterized in that the starting material is first cooled to a pouring temperature in the range of 10°C below the solidification point.

3. Process according to claim 1, characterized in that the wax serving as the starting material is cooled to a pouring temperature in the range of 5°C above to 5°C below the solidification point.

4. Process according to claim 1, 2 or 3, characterized in that the wax is deposited continuously on the bottom conveyor belt (1).

5. Process according to one of claims 1-4, characterized in that cooling to the pouring temperature is carried out in a scraped cooler.

6. Process according to one of claims 1-5, characterized in that the conveyor belts (1,2) and/or the guide belts (17) for preventing lateral leakage are treated with an aqueous solution of a surface-active agent.

7. Process according to one of claims 1-6, characterized in that the slab (19) discharged from the conveyor device is cut by means of a liquid jet or laser beam.

8. Process according to one of claims 1-6, characterized in that the slab (19) discharged form the conveyor device is cut by means of rotating knives and a guillotine cutter.

9. Device for confectioning wax or wax-like material according to the process of one of claims 1 - 8 provided with two in general horizontal endless conveyor belts (1,2) placed opposite each other between which the wax is fed by means of a nozzle (8) and with means for cooling the wax, characterized in that side guide belts (17) are provided running along with and between the parts of the conveyor belts (1,2) facing each other, and having two flat, parallel surfaces facing away form each other, each of which can mate in sealing fashion with the opposite surface of the corresponding conveyor belt part (1,2), that the nozzle (8) is carried out so as to form a layer of wax which is continuous in transverse direction of the conveyor belts (1,2) and that the upper conveyor belt (2) is adjustable perpendicular to its plane in such a way that he is resting on the side guide belts (17) and on the wax for further cooling thereof.

10. Device according to claim 9, characterized in that pulleys (18) are located outside the conveyor belt parts (1,2) facing each other and placed one above the other, in such a way that only the side guide belts (17) are situated between the conveyor belt parts (1,2) facing each other.

11. Device according to claim 9 or 10, characterized in that the side guide (17) belts have a solid rectangular cross-section.

12. Device according to claim 9, 10 or 11, characterized in that provision is made at the guided part of the side guide belts (17) outside the conveyor belts for stabilization means (22,23) above and below the side belts for holding the guided part flat.

13. Device according to claim 9, 10, 11 or 12, characterized in that each of the side guide belts (17) comprises a V-belt (20) which on the largest trapezium side is provided with a rectangular strip (21) of bendable material.

14. Device according to claim 13, characterized in that the V-belt (20) and the strips (21) are made of polyurethane and are attached to each other by means of adhesive.

15. Device according to one of claims 9-14, characterized in that the conveyor belts (1,2) are supported at the level of the region over which the side guide belts (17) can extend.

16. Device according to one of the claim 9-15, characterized in that the side guide belts (17) extend only at the first part of the conveyor belts (1,2), where the wax or wax-like material is still flowable.

17. Device according to one of claims 9 - 16, characterized in that in the direction of movement of the conveyor belt parts (1,2) facing each other the rearmost end of the lowest conveyor belt (1) is situated behind the rearmost end of the upper conveyor belt (2)

18. Device according to claim 17, characterized in that, in the direction of movement of the conveyor belt parts (1,2) facing each other the means (8) for feeding the was are situated such that the upper conveyor belt part (2) does not extend up to and above the feeding means (8).

## Patentansprüche

1. Verfahren zur Verarbeitung von Wachs oder wachsähnlichem Material, das zwischen zwei im wesentlichen horizontale, einander gegenüber und übereinander angeordnete endlose Förderbänder (1,2) einer Fördervorrichtung eingespeist, beim Durchlauf durch die Fördervorrichtung gekühlt und aus dieser Vorrichtung ausgetragen wird, **dadurch gekennzeichnet,** daß das das Ausgangsmaterial bildende Wachs zuerst auf eine mehr als 10 °C über dem Erstarrungspunkt liegende Temperatur erhitzt, auf Gießtemperatur abgekühlt und dann über die volle Breite oder einen wesentlichen Teil davon auf das untere Förderband (1) gegossen wird, um so eine in Planrichtung des genannten Bandes kontinuierliche Wachstafel (19) zu bilden, wobei ein seitliches Abfließen des Wachses verhindert und die aus der Fördervorrichtung ausgetragene Tafel (19) in Abschnitte gewünschter Dimensionen geschnitten wird.

2. Verfahren nach Anspruch 1, **dadurch gekennzeichnet,** daß das Ausgangsmaterial zuerst auf eine Gießtemperatur im Bereich von 10 °C unter dem Erstarrungspunkt abgekühlt wird.

3. Verfahren nach Anspruch 1, **dadurch gekennzeichnet**, daß das das Ausgangsmaterial bildende Wachs auf eine Gießtemperatur im Bereich von 5 °C über bis 5 °C unter den Erstarrungspunkt abgekühlt wird.

4. Verfahren nach Anspruch 1, 2 oder 3, **dadurch gekennzeichnet,** daß das Wachs kontinuierlich auf das untere Förderband (1) aufgebracht wird.

5. Verfahren nach einem der Ansprüche 1 bis 4, **dadurch gekennzeichnet**, daß die Abkühlung auf Gießtemperatur in einem Kratzkühler durchgeführt wird.

6. Verfahren nach einem der Ansprüche 1 bis 5, **dadurch gekennzeichnet**, daß die Förderbänder (1,2) und/oder das seitliche Abfließen verhindernde Leitbänder (17) mit einer wässrigen Lösung eines oberflächenaktiven Stoffes behandelt werden.

7. Verfahren nach einem der Ansprüche 1 bis 6, **dadurch gekennzeichnet**, daß die aus der Fördervorrichtung ausgetragene Tafel (19) mit einem Flüssigkeits- oder Laserstrahl geschnitten wird.

8. Verfahren nach einem der Ansprüche 1 bis 6, **dadurch gekennzeichnet**, daß die aus der Fördervorrichtung ausgetragene Tafel (19) mit rotierenden Messern oder einem Formatschneider geschnitten wird.

9. Vorrichtung zur Verarbeitung von Wachs oder wachsähnlichem Material zur Durchführung des Verfahrens nach einem der Ansprüche 1 bis 8, mit zwei im wesentlichen horizontalen, einander gegenüber angeordneten endlosen Förderbändern (1,2), zwischen die das Wachs über eine Düse (8) eingespeist wird, und mit einer Kühleinrichtung für das Wachs, **gekennzeichnet durch** seitliche Leitbänder (17), die zusammen mit den Förderbändern (1,2) und zwischen den einander zugewandten Abschnitten der Förderbänder umlaufen und zwei flache, parallele, voneinander abgewandte Oberflächen aufweisen, von denen jede abdichtend an der gegenüberliegenden Oberfläche des entsprechenden Förderbandabschnittes (1,2) anliegen kann, daß die Düse (8) so ausgebildet ist, daß sie eine in Planrichtung der Förderbänder (1,2) kontinuierliche Wachsschicht bildet, und daß das obere Förderband (2) senkrecht zu seiner Ebene so justierbar ist, daß es auf den seitlichen Leitbändern (17) sowie auf dem Wachs zu dessen weiterer Abkühlung aufliegt.

10. Vorrichtung nach Anspruch 9, **dadurch gekennzeichnet**, daß außerhalb der einander zugewandten und übereinander angeordneten Förderbandabschnitte (1,2) Riemenscheiben (18) so angeordnet sind, daß nur die seitlichen Leitbänder (17) zwischen den einander zugewandten Förderbandabschnitten (1,2) liegen.

11. Vorrichtung nach Anspruch 9 oder 10, **dadurch gekennzeichnet**, daß die seitlichen Leitbänder (17) einen massiven rechteckigen querschnitt aufweisen.

12. Vorrichtung nach Anspruch 9, 10 oder 11, **dadurch gekennzeichnet**, daß ober- und unterhalb der Seitenbänder im geführten Abschnitt der seitlichen Leitbänder (17) außerhalb der Förderbänder Stabilisierungseinrichtungen (22,23) zum Flachhalten des geführten Abschnitts vorgesehen sind.

13. Vorrichtung nach Anspruch 9, 10, 11 oder 12, **dadurch gekennzeichnet**, daß jedes seitliche Leitband (17) einen Keilriemen (20) aufweist, der auf seiner größten Trapezseite mit einem rechteckigen Streifen (21) aus biegbarem Material versehen ist.

14. Vorrichtung nach Anspruch 13, **dadurch gekennzeichnet**, daß der Keilriemen (20) sowie der Streifen (21) aus Polyurethan bestehen und miteinander verklebt sind.

15. Vorrichtung nach einem der Ansprüche 9 bis 14, **dadurch gekennzeichnet**, daß die Förderbänder (1,2) in der Höhe des Bereiches abgestützt sind, über den sich die seitlichen Leitbänder (17) erstrecken können.

16. Vorrichtung nach einem der Ansprüche 9 bis 15, **dadurch** **gekennzeichnet**, daß sich die seitlichen Leitbänder (17) nur über den ersten Abschnitt der Förderbänder (1,2) erstrecken, wo das Wachs oder das wachsähnliche Material noch fließfähig ist.

17. Vorrichtung nach einem der Ansprüche 9 bis 16, **dadurch gekennzeichnet**, daß in der Bewegungsrichtung der einander zugewandten Förderbandabschnitte (1,2) das hinterste Ende des untersten Förderbandes (1) hinter dem hintersten Ende des oberen Förderbandes (2) liegt.

18. Vorrichtung nach Anspruch 17, **dadurch gekennzeichnet**, daß in der Bewegungsrichtung der einander zugewandten Förderbandabschnitte (1,2) die Einrichtung (8) zur Einspeisung des Wachses so angeordnet ist, daß sich der obere Förderbandabschnitt (2) nicht bis zur oder über die Einspeisevorrichtung (8) erstreckt.

## Revendications

1. Procédé pour confectionner de la cire ou un matériau similaire à la cire, dans lequel la cire est envoyée entre deux bandes transporteuses sans fin (1, 2) généralement horizontales d'un dispositif convoyeur placées face à face et l'une au-dessus de l'autre, et refroidie pendant qu'elle passe par ce dispositif transporteur et est déchargée dudit dispositif, caractérisé en ce que la cire servant de matériau de départ est d'abord chauffée à une température qui est à plus de 10°C au-dessus du point de solidification, est refroidie à la température de versage, et est ensuite versée sur la bande transporteuse inférieure (1) sur la totalité de sa largeur ou sur une partie considérable de celle-ci, de manière à former une plaque (19) de cire qui est continue dans la direction transversale de ladite courroie, une fuite latérale de la cire est empêchée et la plaque (19) déchargée du dispositif transporteur est découpée en pièces selon les dimensions désirées.

2. Procédé selon la revendication 1, caractérisé en ce que le matériau de départ est d'abord refroidi à une température de versage située dans la plage de 10°C au-dessous du point de solidification.

3. Dispositif selon la revendication 1, caractérisé en ce que la cire servant de matériau de départ est refroidie à une température de versage comprise dans la plage de 5°C au-dessus à 5°C au-dessous du point de solidification.

4. Procédé selon la revendication 1, 2 ou 3, caractérisé en ce que la cire est déposée de façon continue sur la bande transporteuse inférieure (1).

5. Procédé selon l'une des revendications 1 à 4, caractérisé en ce que le refroidissement à la température de versage est réalisé dans un refroidisseur à raclage.

6. Procédé selon l'une des revendications 1 à 5, caractérisé en ce que les bandes transporteuses (1, 2) et/ou les bandes de guidage (17) pour empêcher une fuite latérale sont traitées avec une solution aqueuse d'un agent tensioactif.

7. Procédé selon l'une des revendications 1 à 6, caractérisé en ce que la plaque (19) déchargée du dispositif transporteur est découpée au moyen d'un jet liquide ou d'un faisceau laser.

8. Procédé selon l'une des revendications 1 à 6, caractérisé en ce que la plaque (19) déchargée du dispositif transporteur est découpée au moyen de couteaux rotatifs ou d'un couteau de guillotine.

9. Dispositif pour confectionner de la cire ou un matériau similaire à de la cire selon le procédé de l'une des revendications 1 à 8, muni de deux bandes transporteuses sans fin (1, 2) généralement horizontales et placées face à face, entre lesquelles la cire est envoyée au moyen d'une buse (8) et avec des moyens pour refroidir la cire, caractérisé en ce que des bandes de guidage latérales (17) sont prévues pour circuler le long de et entre les parties (1, 2) des bandes transporteuses qui sont face à face, et comprenant deux surfaces planes et parallèles tournées à l'opposé l'une de l'autre, dont chacune peut coopérer de façon étanche avec la surface opposée de la partie correspondante (1, 2) des bandes transporteuses, en ce que la buse (8) est réalisée de manière à former une couche de cire qui est continue dans la direction transversale des bandes transporteuses (1, 2) et en ce que la bande transporteuse supérieure (2) est réglable perpendiculairement à son plan de manière à reposer sur les bandes de guidage latérales (17) et sur la cire en vue de la poursuite du refroidissement de cette dernière.

10. Dispositif selon la revendication 9, caractérisé en ce que des poulies (18) sont disposées à l'extérieur des parties (1, 2) des bandes transporteuses qui sont face à face et placées l'une au-dessus de l'autre, de manière que seules les bandes de guidage latérales (17) soient situées entre les parties (1, 2) des bandes transporteuses qui sont face à face.

11. Dispositif selon la revendication 9 ou 10, caractérisé en ce que les bandes de guidage latérales (17) sont de section rectangulaire et pleine.

12. Dispositif selon l'une des revendications 9, 10 ou 11, caractérisé en ce que sont prévus dans la partie guidée des bandes de guidage latérales (17), à l'extérieur des bandes transporteuses, des moyens de stabilisation (22, 23) au-dessus et au-dessous des bandes latérales pour maintenir la partie guidée à l'état plan.

13. Dispositif selon l'une des revendications 9, 10, 11 ou 12, caractérisé en ce que chacune des bandes de guidage latérales (17) comprend une bande trapézoïdale (20) qui est munie sur le côté le plus important du trapèze d'une bande rectangulaire (21) en un matériau flexible.

14. Dispositif selon la revendication 13, caractérisé en ce que la bande trapézoïdale et les bandes (21) sont réalisées en polyuréthane et sont fixées l'une à l'autre au moyen d'un adhésif.

15. Dispositif selon l'une des revendications 9 à 14, caractérisé en ce que les bandes transporteuses (1,2) sont supportées au niveau de la région sur laquelle peuvent s'étendre les bandes de guidage latérales (17).

16. Dispositif selon l'une des revendications 9 à 15, caractérisé en ce que les bandes de guidage latérales (17) s'étendent seulement dans la première partie des bandes transporteuses (1, 2) où la cire ou le matériau similaire à de la cire est toujours coulant.

17. Dispositif selon l'une des revendications 9 à 16, caractérisé en ce que dans la direction du mouvement des parties (1, 2) des bandes transporteuses qui sont face à face, l'extrémité la plus à l'arrière de la bande transporteuse (1) qui est la plus basse est située à l'arrière de l'extrémité la plus à l'arrière de la bande transporteuse (2) qui est au-dessus.

18. Dispositif selon la revendication 17, caractérisé en ce que dans la direction du mouvement des parties (1, 2) des bandes transporteuses qui sont face à face, les moyens (8) pour alimenter la cire sont situés de manière que la bande transporteuse supérieure (2) ne s'étende pas jusqu'aux moyens d'alimentation (8) et au-dessus de ces derniers.
